# EUROPEAN PATENT APPLICATION

(11) **EP 3 892 757 A1**
(43) Date of publication of application: **13.10.2021**
(21) Application number: 19892370.8
(22) Date of filing: 12.09.2019
(51) Int. Cl.: C25B 15/08, B01D 53/22, B01D 53/26, B01D 63/08, B01D 71/06, C25B 1/02, H01M 8/00

(54) **HYDROGEN COMPRESSION SYSTEM**

(30) Priority: 03.12.2018 JP 2018226477
(71) Applicant: Panasonic Intellectual Property Management Co., Ltd., Osaka-shi, Osaka 540-6207 (JP)
(72) Inventor: UKAI, Kunihiro, Osaka-shi Osaka 540-6207 (JP); KANI Yukimune, Osaka-shi Osaka 540-6207, (JP)
(74) Representative: Grünecker Patent- und Rechtsanwälte PartG mbB
(86) International application number: PCT/JP2019/035794
(87) International publication number: WO 2020/115983

(57) **Abstract**

A hydrogen pressurization system includes: an electrochemical hydrogen pump being configured to transfer hydrogen in a hydrogen-containing gas to be supplied to an anode to a cathode through an electrolyte membrane, and pressurize the hydrogen; and a first removal unit through which an off-gas discharged from the cathode of the electrochemical hydrogen pump and the hydrogen-containing gas to be supplied to the anode flow with a water permeable membrane interposed therebetween, the first removal unit being configured to remove at least one of water vapor and water liquid contained in the off-gas.

## Description

### Technical Field

The present disclosure relates to a hydrogen pressurization system.

### Background Art

In recent years, due to environmental issues, such as global warming, and energy issues, such as depletion of petroleum resources, hydrogen has attracted attention as a clean alternative energy source to fossil fuels. Hydrogen basically produces only water during combustion, does not produce carbon dioxide, which is responsible for global warming, and produces little nitrogen oxide. Thus, hydrogen is promising clean energy. For example, fuel cells efficiently utilize hydrogen as a fuel and are being developed and spread as power supplies for automobiles and domestic power generation.

For a future hydrogen economy, in addition to hydrogen production, there is a demand for technological development of high-density storage and low-volume and low-cost transport or utilization of hydrogen. In particular, to promote the spread of fuel cells serving as distributed energy sources, it is necessary to improve fuel supply infrastructure.

To ensure a stable supply of hydrogen in the fuel supply infrastructure, various propositions have been made to purify and pressurize high-purity hydrogen.

For example, Patent Literature 1 discloses a water electrolyzer for producing high-pressure hydrogen during water electrolysis. Hydrogen produced by water electrolysis accompanies water vapor. In the storage of hydrogen that accompanies much water vapor in a hydrogen reservoir, such as a tank, therefore, water vapor in the hydrogen reservoir decreases the amount of hydrogen in the hydrogen reservoir. Thus, it is not efficient. Furthermore, water vapor associated with hydrogen may solidify in a hydrogen reservoir. Thus, the amount of water vapor associated with hydrogen stored in a hydrogen reservoir is desirably decreased to approximately 5 ppm or less, for example. Thus, a hydrogen production system proposed in Patent Literature 1 includes a gas-liquid separator and an adsorption tower on a hydrogen flow path between the water electrolyzer and a hydrogen reservoir. The gas-liquid separator separates hydrogen from water vapor. The adsorption tower removes water associated with hydrogen by adsorption.

For example, in a system proposed in Patent Literature 2, a pressure swing adsorption refinery (PSA) is used as an adsorption tower for removing water vapor associated with high-pressure hydrogen by adsorption to consistently remove water vapor associated with hydrogen.

### Citation List

### Patent Literature

PTL 1: Japanese Unexamined Patent Application Publication No. 2009-179842
PTL 2: Japanese Unexamined Patent Application Publication (Translation of PCT Application) No. 2017-534435

### Summary of Invention

### Technical Problem

For example, the present disclosure aims to provide a hydrogen pressurization system that can more appropriately perform the removal of at least one of water vapor and water liquid contained in an off-gas discharged from a cathode of an electrochemical hydrogen pump and humidification of a hydrogen-containing gas to be supplied to an anode of the electrochemical hydrogen pump than before.

### Solution to Problem

To solve the above problems, a hydrogen pressurization system according to an aspect of the present disclosure includes: an electrochemical hydrogen pump being configured to transfer hydrogen in a hydrogen-containing gas to be supplied to an anode to a cathode through an electrolyte membrane, and pressurize the hydrogen; and a first removal unit through which an off-gas discharged from the cathode of the electrochemical hydrogen pump and the hydrogen-containing gas to be supplied to the anode flow with a water permeable membrane interposed therebetween, the first removal unit being configured to remove at least one of water vapor and water liquid contained in the off-gas . Advantageous Effects of Invention

A hydrogen pressurization system according to an aspect of the present disclosure can more appropriately perform the removal of at least one of water vapor and water liquid contained in an off-gas discharged from a cathode of an electrochemical hydrogen pump and humidification of a hydrogen-containing gas to be supplied to an anode of the electrochemical hydrogen pump than before. Brief Description of Drawings
[Fig. 1] Fig. 1 is a schematic view of a hydrogen pressurization system according to a first embodiment.
[Fig. 2A] Fig. 2A is a schematic view of an electrochemical hydrogen pump of the hydrogen pressurization system according to the first embodiment.
[Fig. 2B] Fig. 2B is an enlarged view of B in the electrochemical hydrogen pump of Fig. 2A.
[Fig. 3A] Fig. 3A is a schematic view of an electrochemical hydrogen pump of the hydrogen pressurization system according to the first embodiment.
[Fig. 3B] Fig. 3B is an enlarged view of B in the electrochemical hydrogen pump of Fig. 3A.
[Fig. 4] Fig. 4 is a schematic view of a first removal unit of a hydrogen pressurization system according to an example of the first embodiment.
[Fig. 5] Fig. 5 is a schematic view of a hydrogen pressurization system according to a second embodiment.
[Fig. 6] Fig. 6 is a schematic view of a hydrogen pressurization system according to a modified example of the second embodiment.
[Fig. 7] Fig. 7 is a schematic view of a hydrogen pressurization system according to a third embodiment.

### Description of Embodiments

When water liquid in a hydrogen gas discharged from a water electrolyzer is removed from the hydrogen gas with a gas-liquid separator, it is known that the water liquid separated with the gas-liquid separator is returned to a system for supplying water liquid to the water electrolyzer, as described in Patent Literature 1. However, Patent Literature 1 does not describe the removal of at least one of water vapor and water liquid contained in a high-pressure hydrogen discharged from a cathode of an electrochemical hydrogen pump (hereinafter referred to as an off-gas) or humidification of a hydrogen-containing gas to be supplied to an anode of the electrochemical hydrogen pump.

In an electrochemical hydrogen pump with a solid polymer electrolyte membrane (hereinafter referred to as an electrolyte membrane), hydrogen (H₂) in a hydrogen-containing gas to be supplied to an anode is protonated and transferred to a cathode, and the protons (H⁺) at the cathode are reduced to hydrogen (H₂) to pressurize the hydrogen. Typically, high temperature and high humidity conditions (for example, approximately 60°C) increase the proton conductivity of electrolyte membranes and improve the hydrogen pressurization efficiency of electrochemical hydrogen pumps. Thus, a hydrogen-containing gas supplied to an anode of an electrochemical hydrogen pump is often humidified.

As a result of extensive studies, the present inventors arrived at the following aspect of the present disclosure by finding that a hydrogen-containing gas to be supplied to an anode of an electrochemical hydrogen pump can be humidified by removing at least one of water vapor and water liquid contained in an off-gas discharged from a cathode of the electrochemical hydrogen pump.

A hydrogen pressurization system according to a first aspect of the present disclosure includes an electrochemical hydrogen pump that indues: an electrochemical hydrogen pump being configured to transfer hydrogen in a hydrogen-containing gas to be supplied to an anode to a cathode through an electrolyte membrane, and pressurize the hydrogen; and a first removal unit through which an off-gas discharged from the cathode of the electrochemical hydrogen pump and the hydrogen-containing gas to be supplied to the anode flow with a water permeable membrane interposed therebetween, the first removal unit being configured to remove at least one of water vapor and water liquid contained in the off-gas.

With such a structure, the hydrogen pressurization system according to the present aspect can more appropriately perform the removal of at least one of water vapor and water liquid contained in an off-gas discharged from a cathode of an electrochemical hydrogen pump and humidification of a hydrogen-containing gas to be supplied to an anode of the electrochemical hydrogen pump than before.

For example, the differential pressure in the first removal unit can cause water liquid to be transferred from a high-pressure off-gas to a low-pressure hydrogen-containing gas through the water permeable membrane. This can transfer from a high partial water vapor pressure off-gas to a low partial water vapor pressure hydrogen-containing gas through the water permeable membrane. That is, when a pressure of the off-gas is higher than a pressure of the hydrogen-containing gas and/or a partial water vapor pressure off-gas is higher than a partial water vapor pressure of hydrogen-containing gas, this can decrease the content of at least one of water vapor and water liquid contained in an off-gas. At least one of water vapor and water liquid passing through the water permeable membrane can humidify the hydrogen-containing gas.

A hydrogen pressurization system according to a second aspect of the present disclosure may further include a cooler for cooling an off-gas located upstream of the first removal unit of the hydrogen pressurization system according to the first aspect.

With such a structure, the hydrogen pressurization system according to the present aspect can cool the off-gas with the cooler and thereby promote the removal of water vapor from the off-gas and humidification of the hydrogen-containing gas. For example, the saturated water vapor density of an off-gas decreases with decreasing temperature of the off-gas. Thus, if the water vapor content of an off-gas is equal to the saturated water vapor density, the cooler can decrease the off-gas temperature to rapidly decrease the water vapor content of the off-gas and promote the removal of water vapor from the off-gas. This increases the amount of liquid water in the first removal unit and increases the probability of the liquid water coming into contact with the water permeable membrane. When the liquid water comes into contact with the water permeable membrane, the differential pressure in the first removal unit can cause the liquid water to be rapidly transferred from the off-gas to the hydrogen-containing gas and promote humidification of the hydrogen-containing gas.

A hydrogen pressurization system according to a third aspect of the present disclosure may further include a cooler for cooling an off-gas in the first removal unit of the hydrogen pressurization system according to the first aspect.

With such a structure, the hydrogen pressurization system according to the present aspect can cool an off-gas in the first removal unit and allows the first removal unit to function as a condenser for the off-gas. This reduces the possibility of condensed water blocking an off-gas line and reduces the pressure fluctuation of the off-gas line as compared with the cooling of an off-gas before the off-gas flows into the first removal unit. The reason for this is described below. Condensed water produced by cooling an off-gas with a cooler located upstream of the first removal unit can block a line from the cooler to the first removal unit. In the third aspect, condensed water produced in the first removal unit is directly transferred through the water permeable membrane into the hydrogen-containing gas to be supplied to an anode and is therefore less likely to block the off-gas line.

The operational advantages of the hydrogen pressurization system according to the present aspect other than those described above are identical with the operational advantages of the hydrogen pressurization system according to the second aspect and are not described here.

According to a fourth aspect of the present disclosure, the first removal unit in the hydrogen pressurization system according to any one of the first to third aspects may include a first porous structure in contact with the water permeable membrane in a flow path through which an off-gas flows.

If the flow path through which an off-gas flows does not include the first porous structure, the off-gas flow in the flow path tends to be a laminar flow. In this case, at least one of water vapor and water liquid in the off-gas flows together with the off-gas, and at least one of water vapor and water liquid in the off-gas distant from the water permeable membrane, for example, is less likely to come into contact with the water permeable membrane. Thus, in this case, at least one of water vapor and water liquid passing through the water permeable membrane may be limited to at least one of water vapor and water liquid in the off-gas near the surface of the water permeable membrane.

In contrast, in the hydrogen pressurization system according to the present aspect, the first porous structure in the flow path through which an off-gas flows can forcibly change the off-gas flow in random directions in the flow path. Thus, at least one of water vapor and water liquid in the off-gas at any position in the flow path can come into contact with the water permeable membrane.

Thus, in the hydrogen pressurization system according to the present aspect, at least one of water vapor and water liquid in the off-gas is more likely to come into contact with the water permeable membrane than in hydrogen pressurization systems without the first porous structure in the flow path through which the off-gas flows. When at least one of water vapor and water liquid in the off-gas comes into contact with the water permeable membrane, the at least one of water vapor and water liquid to be rapidly transferred from the off-gas to the hydrogen-containing gas and promote the removal of at least one of water vapor and water liquid contained in the off-gas and humidification of the hydrogen-containing gas.

If the first porous structure is not in contact with the water permeable membrane, the off-gas flows more easily through the space between the first porous structure and the water permeable membrane.

In such a case, for example, variations in the size of the space due to variations in the differential pressure in the first removal unit result in variations in the off-gas flow in the flow path and consequently variations in the contact between the water permeable membrane and the off-gas. This affects the water permeability of the water permeable membrane and makes it difficult to stably perform the removal of at least one of water vapor and water liquid contained in the off-gas and humidification of the hydrogen-containing gas.

By contrast, the hydrogen pressurization system according to the present aspect can have a stable contact interface between the first porous structure and the water permeable membrane and thereby alleviate such a problem.

In a hydrogen pressurization system according to a fifth aspect of the present disclosure, the first porous structure in the hydrogen pressurization system according to the fourth aspect may be composed of an elastomer containing carbon fibers.

In the hydrogen pressurization system with such a structure according to the present aspect, the first porous structure composed of an elastomer containing carbon fibers can stably maintain the contact interface between the first porous structure and the water permeable membrane.

For example, deformation of the water permeable membrane due to the differential pressure in the first removal unit or deformation of the wall of the first removal unit due to the gas pressure of an off-gas makes it difficult to stably maintain the contact interface between the first porous structure and the water permeable membrane.

Even in such a case, in the hydrogen pressurization system according to the present aspect, the elastic deformation of the first porous structure can follow the deformation of the water permeable membrane or the deformation of the wall of the first removal unit. For example, when the first porous structure is placed in the first removal unit, the first porous structure may be compressed in advance in proportion to the deformation of the component.

This enables the contact interface between the first porous structure and the water permeable membrane to be easily maintained throughout the water permeable membrane. Thus, the hydrogen pressurization system according to the present aspect can stably perform the removal of at least one of water vapor and water liquid contained in an off-gas and humidification of the hydrogen-containing gas.

In a hydrogen pressurization system according to a sixth aspect of the present disclosure, the water permeable membrane in the hydrogen pressurization system according to any one of the first to fifth aspects may be composed of a polymer film.

In the hydrogen pressurization system with such a structure according to the present aspect, at least one of water vapor and water liquid contained in the off-gas is transferred through the water permeable.

In a hydrogen pressurization system according to a seventh aspect of the present disclosure, the first removal unit in the hydrogen pressurization system according to any one of the first to sixth aspects may include a second porous structure in contact with the water permeable membrane in a flow path through which the hydrogen-containing gas flows.

If the second porous structure is not placed in the flow path through which the hydrogen-containing gas flows, the differential pressure in the first removal unit causes the water permeable membrane to be deformed in such a direction that the flow path through which the hydrogen-containing gas flows is blocked. For example, the differential pressure in the first removal unit may cause the water permeable membrane to come into contact with the wall of the first removal unit that constitutes the flow path.

This impedes the flow of the hydrogen-containing gas. In the hydrogen pressurization system according to the present aspect, however, such a problem can be alleviated by the second porous structure placed in the flow path through which the hydrogen-containing gas flows.

If the second porous structure is not in contact with the water permeable membrane, the hydrogen-containing gas flows more easily through the space between the second porous structure and the water permeable membrane.

In such a case, for example, variations in the size of the space due to variations in the differential pressure in the first removal unit result in variations in the hydrogen-containing gas flow in the flow path and consequently variations in the contact between the water permeable membrane and the hydrogen-containing gas. This affects the water permeability of the water permeable membrane and makes it difficult to stably perform the removal of at least one of water vapor and water liquid contained in the off-gas and humidification of the hydrogen-containing gas.

By contrast, the hydrogen pressurization system according to the present aspect can have a stable contact interface between the second porous structure and the water permeable membrane and thereby alleviate such a problem.

In a hydrogen pressurization system according to an eighth aspect of the present disclosure, the second porous structure in the hydrogen pressurization system according to the seventh aspect may be made of a metal. In a hydrogen pressurization system according to a ninth aspect of the present disclosure, the second porous structure in the hydrogen pressurization system according to the eighth aspect may be a sintered metal.

In the hydrogen pressurization system with such a structure according to the present aspect, the second porous structure made of the metallic material can have appropriate rigidity. This reduces the deformation of the water permeable membrane caused by the differential pressure in the first removal unit and can stably maintain the contact interface between the first porous structure and the water permeable membrane and the contact interface between the second porous structure and the water permeable membrane. Thus, the hydrogen pressurization system according to the present aspect can stabilize the removal of at least one of water vapor and water liquid contained in an off-gas and humidification of the hydrogen-containing gas.

As in the adsorption tower disclosed in Patent Literature 1 or 2, water vapor associated with hydrogen can be adsorbed by an adsorbent composed of a porous material, such as zeolite. The adsorbent, however, has limited adsorption performance. Thus, the operation time of an adsorption tower depends on the amount of water vapor supplied to the adsorption tower. When an adsorption tower is used for hydrogen that accompanies much water vapor, for example, the adsorption tower must be upsized. Furthermore, for an adsorption tower through which high-pressure hydrogen flows, the adsorption tower vessel must resist high pressure, which possibly results in a still larger adsorption tower.

As described in Patent Literature 2, a pressure swing adsorption refinery may be used to decrease the loading amount of adsorbent. However, this results in a complicated component constituting the flow path through which hydrogen flows and requires the treatment of hydrogen adsorbed together with water vapor on an adsorbent during regeneration of the adsorbent, thus leaving room for improvement.

Thus, a hydrogen pressurization system according to a tenth aspect of the present disclosure may include a second removal unit containing an adsorbent for removing at least one of water vapor and water liquid contained in an off-gas located downstream of the first removal unit in the hydrogen pressurization system according to any one of the first to ninth aspects.

In the hydrogen pressurization system with such a structure according to the present aspect, at least one of water vapor and water liquid contained in an off-gas that is not removed by the first removal unit is adsorbed and removed using the adsorbent in the second removal unit. Thus, the hydrogen pressurization system according to the present aspect can decrease the amount of at least one of water vapor and water liquid to be adsorbed on the adsorbent per unit time as compared with the case in which at least one of water vapor and water liquid contained in an off-gas is not removed with the first removal unit. Thus, even with a smaller loading amount of adsorbent in the second removal unit, the water adsorption performance of the adsorbent in the second removal unit can be appropriately maintained for a desired time. This can decrease the size of the second removal unit and reduce costs.

Specific examples of each aspect of the present disclosure are described below with reference to the accompanying drawings.

The following specific examples are examples of each aspect. Thus, the shape, material, constituent, and arrangement and coupling of constituents in the following specific examples do not limit the aspects unless otherwise specified in the appended claims. Among the constituents described below, constituents not described in the independent claims defining the highest level concepts of the present aspects are described as optional constituents. Those denoted by like reference numerals in the drawings are sometimes not described again. Constituents in the drawings are schematically illustrated for the sake of clarity, and their shapes and dimensions may not be accurate.

### (First Embodiment)

### [Structure of Hydrogen Pressurization System]

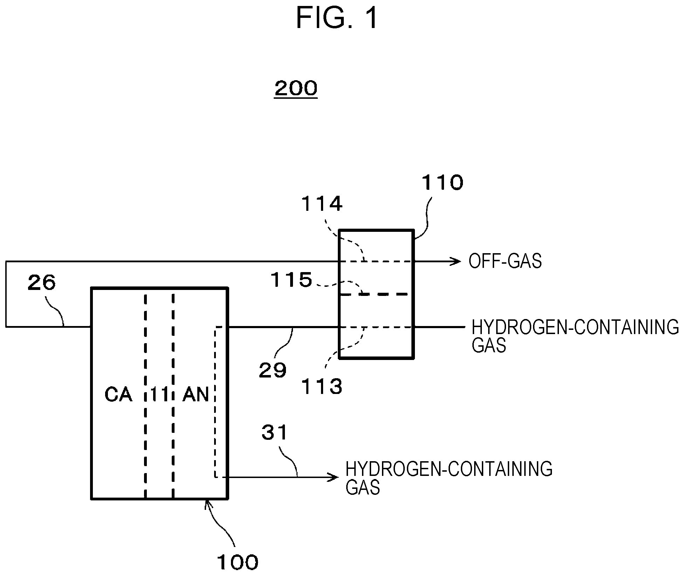

Fig. 1 illustrates a hydrogen pressurization system according to a first embodiment.

In the embodiment illustrated in Fig. 1, a hydrogen pressurization system 200 includes an electrochemical hydrogen pump 100 and a first removal unit 110.

The electrochemical hydrogen pump 100 transfers hydrogen contained in a hydrogen-containing gas containing water vapor to be supplied to an anode AN to a cathode CA through an electrolyte membrane 11 and pressurizes the hydrogen. The electrochemical hydrogen pump 100 may be any electrochemical pressurization unit that includes the electrolyte membrane 11.

For example, the electrochemical hydrogen pump 100 illustrated in Fig. 1 is provided with an anode gas inlet line 29 through which the hydrogen-containing gas to be supplied to the anode AN flows, an anode gas outlet line 31 through which the hydrogen-containing gas discharged from the anode AN flows, and a cathode gas outlet line 26 through which an off-gas discharged from the cathode CA flows. The detailed structure of the electrochemical hydrogen pump 100 is described later.

The hydrogen-containing gas is a low-pressure reformed gas generated by reforming of methane gas or a low-pressure hydrogen-containing gas containing water vapor generated by water electrolysis, for example.

The off-gas is a high-pressure hydrogen-containing gas containing such as water vapor, discharged from the cathode CA, for example.

In the first removal unit 110, the off-gas discharged from the cathode CA of the electrochemical hydrogen pump 100 and the hydrogen-containing gas to be supplied to the anode AN of the electrochemical hydrogen pump 100 flow with a water permeable membrane 115 interposed therebetween, and removes at least one of water vapor and water liquid contained in the off-gas. More specifically, the first removal unit 110 is a removal unit of a membrane type and includes a flow path 113 through which the hydrogen-containing gas flows, a flow path 114 through which the off-gas flows, and the water permeable membrane 115 located between these flow paths 113 and 114.

The water permeable membrane 115 may have any structure through which hydrogen (H₂) in the off-gas does not pass and through which at least one of water vapor and water liquid contained in the off-gas passes.

The water permeable membrane 115 is composed of a polymer film, for example. This can provide that at least one of water vapor and water liquid contained in the off-gas is transferred through the water permeable membrane 115. Such a polymer film may be a proton-conducting polymer film that is composed of the same material as the electrolyte membrane 11 and that can transfer protons (H⁺). More specifically, the water permeable membrane 115 may be a fluorinated polymer film or a hydrocarbon polymer film that can be used as a proton-conducting polymer film. When the hydrogen-containing gas supplied to the first removal unit 110 does not include water liquid, a partial pressure of water vapor of the hydrogen-containing gas is lower than a partial pressure of water vapor of the off-gas. By this, water vapor contained in hydrogen-containing gas in the first removal unit 110 transfers to the off-gas through the water permeable membrane 115.

The detailed structure of the first removal unit 110 is described in the examples.

### [Structure of Electrochemical Hydrogen Pump]

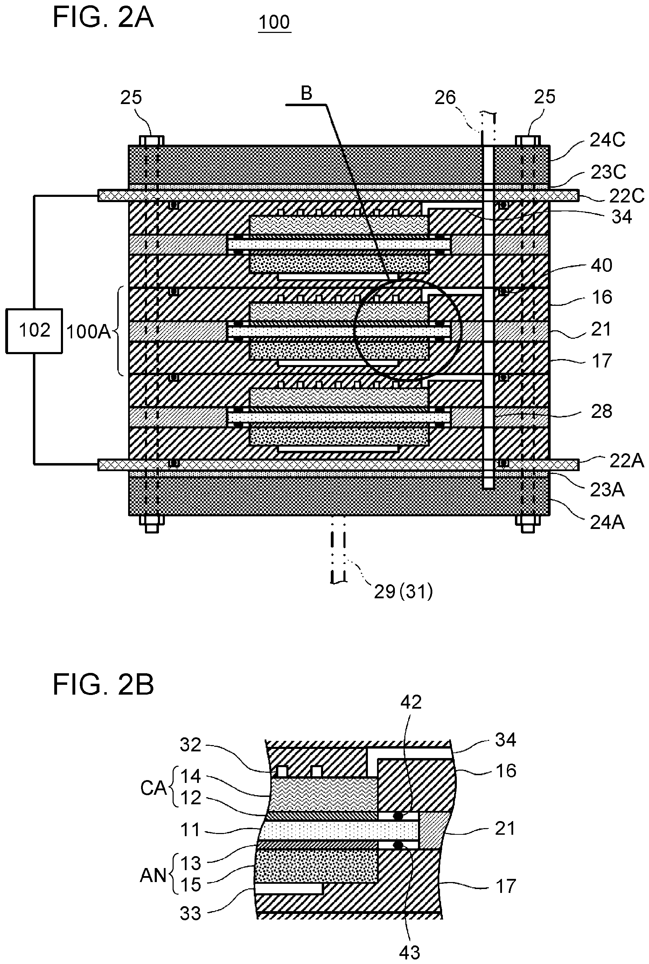

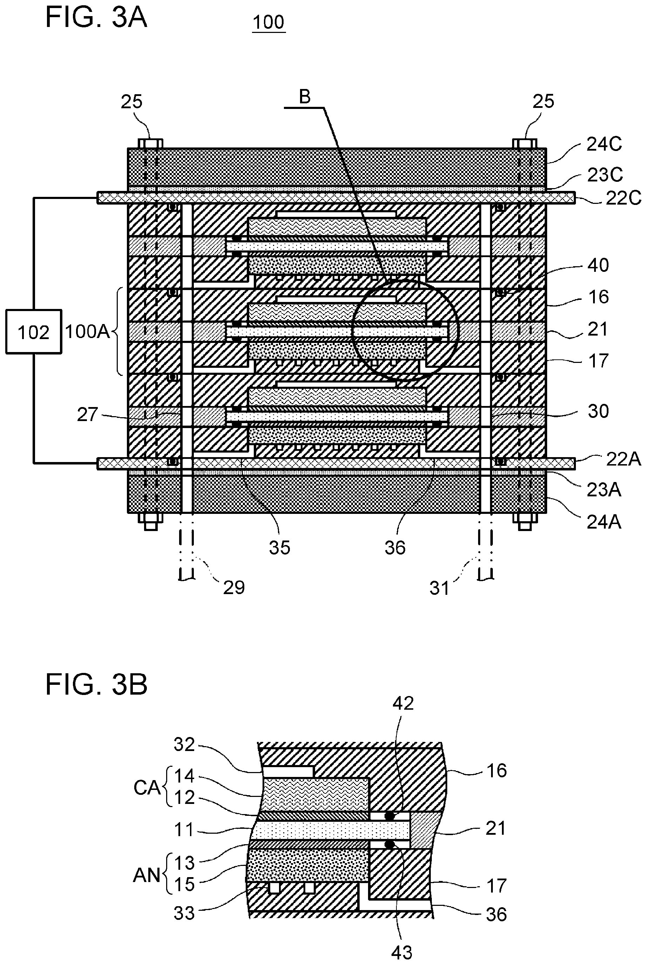

Figs. 2A and 3A illustrate an electrochemical hydrogen pump of the hydrogen pressurization system according to the first embodiment. Fig. 2B is an enlarged view of IIB in the electrochemical hydrogen pump of Fig. 2A. Fig. 3B is an enlarged view of IIIB in the electrochemical hydrogen pump of Fig. 3A.

Fig. 2A illustrates a vertical cross section of the electrochemical hydrogen pump 100 including a straight line passing through the center of the electrochemical hydrogen pump 100 and the center of a cathode gas outlet manifold 28 when viewed from the top. Fig. 3A illustrates a vertical cross section of the electrochemical hydrogen pump 100 including a straight line passing through the center of the electrochemical hydrogen pump 100, the center of an anode gas inlet manifold 27, and the center of an anode gas outlet manifold 30 when viewed from the top.

In the embodiments illustrated in Figs. 2A and 3A, the electrochemical hydrogen pump 100 includes at least one hydrogen pump unit 100A.

The electrochemical hydrogen pump 100 includes a stack of hydrogen pump units 100A. For example, in Figs. 2A and 3A, three hydrogen pump units 100A are stacked. The number of hydrogen pump units 100A is not limited to three. In other words, the number of hydrogen pump units 100A can be appropriately determined on the basis of the operating conditions, such as the amount of hydrogen to be pressurized by the electrochemical hydrogen pump 100.

The hydrogen pump unit 100A includes the electrolyte membrane 11, an anode AN, a cathode CA, a cathode separator 16, an anode separator 17, and an insulator 21. In the hydrogen pump unit 100A, the electrolyte membrane 11, an anode catalyst layer 13, a cathode catalyst layer 12, an anode gas diffusion layer 15, a cathode gas diffusion layer 14, the anode separator 17, and the cathode separator 16 are stacked.

The anode AN is located on one main surface of the electrolyte membrane 11. The anode AN is an electrode that includes the anode catalyst layer 13 and the anode gas diffusion layer 15. When viewed from the top, the anode catalyst layer 13 is surrounded with a circular sealing member 43, and the anode catalyst layer 13 is appropriately sealed with the sealing member 43.

The cathode CA is located on the other main surface of the electrolyte membrane 11. The cathode CA is an electrode that includes the cathode catalyst layer 12 and the cathode gas diffusion layer 14. When viewed from the top, the cathode catalyst layer 12 is surrounded with a circular sealing member 42, and the cathode catalyst layer 12 is appropriately sealed with the sealing member 42.

Thus, the electrolyte membrane 11 in contact with the anode catalyst layer 13 and the cathode catalyst layer 12 is held between the anode AN and the cathode CA. The stack of the cathode CA, the electrolyte membrane 11, and the anode AN is hereinafter referred to as a membrane electrode assembly (MEA).

The electrolyte membrane 11 has proton conductivity. The electrolyte membrane 11 may have any structure that has proton conductivity. For example, the electrolyte membrane 11 is, but not limited to, a fluorinated polymer electrolyte membrane or a hydrocarbon polymer electrolyte membrane. More specifically, for example, the electrolyte membrane 11 is Nafion (registered trademark, manufactured by Du Pont) or Aciplex (registered trademark, manufactured by Asahi Kasei Corporation).

The anode catalyst layer 13 is located on one main surface of the electrolyte membrane 11. The anode catalyst layer 13 contains platinum, for example, as a catalytic metal but may contain another catalytic metal.

The cathode catalyst layer 12 is located on the other main surface of the electrolyte membrane 11. The cathode catalyst layer 12 contains platinum, for example, as a catalytic metal but may contain another catalytic metal.

The catalyst carrier for the cathode catalyst layer 12 and the anode catalyst layer 13 is, but not limited to, a carbon powder, such as carbon black or graphite, or an electrically conductive oxide powder, for example.

In the cathode catalyst layer 12 and the anode catalyst layer 13, fine particles of a catalytic metal are highly dispersed on a catalyst carrier. A proton conductive ionomer component is typically added to the cathode catalyst layer 12 and the anode catalyst layer 13 to extend the electrode reaction field.

The cathode gas diffusion layer 14 is located on the cathode catalyst layer 12. The cathode gas diffusion layer 14 is composed of a porous material and has electrical conductivity and gas diffusivity. Furthermore, the cathode gas diffusion layer 14 desirably has elasticity to follow the displacement or deformation of the constituent caused by the differential pressure between the cathode CA and the anode AN during the operation of the electrochemical hydrogen pump 100. In the electrochemical hydrogen pump 100 according to the present embodiment, the cathode gas diffusion layer 14 is formed of a material composed of carbon fibers, for example, a porous carbon fiber sheet, such as carbon paper, carbon cloth, or carbon felt. The substrate of the cathode gas diffusion layer 14 is not necessarily a carbon fiber sheet. For example, the substrate of the cathode gas diffusion layer 14 may be a metal fiber sintered body composed of titanium, a titanium alloy, or stainless steel, or a metal powder sintered body composed thereof.

The anode gas diffusion layer 15 is located on the anode catalyst layer 13. The anode gas diffusion layer 15 is composed of a porous material and has electrical conductivity and gas diffusivity. The anode gas diffusion layer 15 desirably has high-rigidity to reduce the displacement or deformation of the constituent caused by the differential pressure between the cathode CA and the anode AN during the operation of the electrochemical hydrogen pump 100.

In the electrochemical hydrogen pump 100 according to the present embodiment, the anode gas diffusion layer 15 is, but not limited to, a component formed of a sheet of a titanium powder sintered body. More specifically, the substrate of the anode gas diffusion layer 15 may be a metal fiber sintered body composed of titanium, a titanium alloy, or stainless steel, or a metal powder sintered body composed thereof. The substrate of the anode gas diffusion layer 15 may also be formed of expanded metal, a metal mesh, or perforated metal.

The anode separator 17 is located on the anode gas diffusion layer 15 of the anode AN. The cathode separator 16 is located on the cathode gas diffusion layer 14 of the cathode CA.

Each of the cathode separator 16 and the anode separator 17 has a recessed portion at the center thereof. The cathode gas diffusion layer 14 and the anode gas diffusion layer 15 are located within these recessed portions.

In this manner, the cathode separator 16, the anode separator 17, and the MEA located therebetween constitute the hydrogen pump unit 100A.

When viewed from the top, for example, a serpentine cathode gas passage 32 including U-shaped portions and linear portions is located on the main surface of the cathode separator 16 in contact with the cathode gas diffusion layer 14. The linear portions of the cathode gas passage 32 extend perpendicularly to the drawing in Fig. 2A. The cathode gas passage 32 is an example, to which the present disclosure is not limited. For example, the cathode gas passage may be composed of linear flow paths.

When viewed from the top, for example, a serpentine anode gas passage 33 including U-shaped portions and linear portions is located on the main surface of the anode separator 17 in contact with the anode gas diffusion layer 15. The linear portions of the anode gas passage 33 extend perpendicularly to the drawing in Fig. 3A. The anode gas passage 33 is an example, to which the present disclosure is not limited. For example, the anode gas passage may be composed of linear flow paths.

The insulator 21 surrounding the MEA is located between the cathode separator 16 and the anode separator 17, which are electrically conductive. The insulator 21 is circular and flat. This prevents a short circuit between the cathode separator 16 and the anode separator 17.

The electrochemical hydrogen pump 100 includes a first end plate and a second end plate at each end in the stacking direction of the hydrogen pump units 100A, and a fastener 25 for fastening the hydrogen pump units 100A, the first end plate, and the second end plate in the stacking direction.

In the embodiments illustrated in Figs. 2A and 3A, a cathode end plate 24C and an anode end plate 24A correspond to the first end plate and the second end plate, respectively. The anode end plate 24A is an end plate on the anode separator 17 located at one end in the stacking direction of the components of the hydrogen pump unit 100A. The cathode end plate 24C is an end plate on the cathode separator 16 located at the other end in the stacking direction of the components of the hydrogen pump unit 100A.

The fastener 25 may have any structure that can fasten the hydrogen pump units 100A, the cathode end plate 24C, and the anode end plate 24A in the stacking direction.

For example, the fastener 25 is a bolt and a nut with a conical spring washer.

A bolt of the fastener 25 may path through only the anode end plate 24A and the cathode end plate 24C. In the electrochemical hydrogen pump 100 according to the present embodiment, such a bolt paths through the components of the three hydrogen pump units 100A, a cathode feed plate 22C, a cathode insulating plate 23C, an anode feed plate 22A, an anode insulating plate 23A, the anode end plate 24A, and the cathode end plate 24C. The fastener 25 applies a desired clamping pressure to the hydrogen pump units 100A while an end surface of the cathode separator 16 located at one end in the stacking direction and an end surface of the anode separator 17 located at the other end in the stacking direction are located between the cathode end plate 24C and the anode end plate 24A via the cathode feed plate 22C and the cathode insulating plate 23C and via the anode feed plate 22A and the anode insulating plate 23A.

Thus, in the electrochemical hydrogen pump 100 according to the present embodiment, the three hydrogen pump units 100A are appropriately held in the stacked state by the clamping pressure of the fastener 25 in the stacking direction, and a bolt of the fastener 25 passing through the components of the electrochemical hydrogen pump 100 appropriately restricts the movement of these components in the in-plane direction.

In the electrochemical hydrogen pump 100 according to the present embodiment, the cathode gas passages 32 through which an off-gas discharged from the cathode gas diffusion layer 14 of each hydrogen pump unit 100A flows communicate with each other. Communication of the cathode gas passages 32 is described below with reference to the accompanying drawings.

First, as illustrated in Fig. 2A, the cathode gas outlet manifold 28 is composed of through-holes drilled in the components of the three hydrogen pump units 100A and in the cathode end plate 24C and a closed-end hole drilled in the anode end plate 24A. The cathode end plate 24C has the cathode gas outlet line 26. The cathode gas outlet line 26 may be composed of a pipe through which an off-gas discharged from the cathode CA flows. The cathode gas outlet line 26 communicates with the cathode gas outlet manifold 28.

Furthermore, the cathode gas outlet manifold 28 communicates with one end portion of the cathode gas passage 32 of each hydrogen pump unit 100A via a cathode gas flow path 34. Thus, off-gases passing through the cathode gas passages 32 and the cathode gas flow paths 34 of the hydrogen pump units 100A are merged in the cathode gas outlet manifold 28. The merged off-gas is introduced into the cathode gas outlet line 26.

In this manner, the cathode gas passages 32 of the hydrogen pump units 100A communicate with each other through the cathode gas flow path 34 of each hydrogen pump unit 100A and the cathode gas outlet manifold 28.

When viewed from the top, a circular sealing member 40, such as an O-ring, surrounds and appropriately seals the cathode gas outlet manifold 28 between the cathode separator 16 and the anode separator 17, between the cathode separator 16 and the cathode feed plate 22C, and between the anode separator 17 and the anode feed plate 22A.

As illustrated in Fig. 3A, the anode end plate 24A is provided with the anode gas inlet line 29. The anode gas inlet line 29 may be a pipe through which a hydrogen-containing gas to be supplied to the anode AN flows. The anode gas inlet line 29 communicates with the anode gas inlet manifold 27 of cylindrical shape. The anode gas inlet manifold 27 is composed of through-holes drilled in the components of the three hydrogen pump units 100A and in the anode end plate 24A.

The anode gas inlet manifold 27 communicates with one end portion of the anode gas passage 33 of each hydrogen pump unit 100A via a first anode gas flow path 35. Thus, a hydrogen-containing gas supplied to the anode gas inlet manifold 27 through the anode gas inlet line 29 is distributed to each hydrogen pump unit 100A through the first anode gas flow path 35. While the distributed hydrogen-containing gas passes through the anode gas passage 33, the hydrogen-containing gas is supplied to the anode catalyst layer 13 through the anode gas diffusion layer 15.

As illustrated in Fig. 3A, the anode end plate 24A is provided with the anode gas outlet line 31. The anode gas outlet line 31 may be a pipe through which a hydrogen-containing gas discharged from the anode AN flows. The anode gas outlet line 31 communicates with the anode gas outlet manifold 30 of cylindrical shape. The anode gas outlet manifold 30 is composed of through-holes drilled in the components of the three hydrogen pump units 100A and in the anode end plate 24A.

The anode gas outlet manifold 30 communicates with the other end portion of the anode gas passage 33 of each hydrogen pump unit 100A via a second anode gas flow path 36. Thus, hydrogen-containing gases passing through the anode gas passages 33 of the hydrogen pump units 100A are supplied to and merged in the anode gas outlet manifold 30 through the second anode gas flow paths 36. The merged hydrogen-containing gas is introduced into the anode gas outlet line 31.

When viewed from the top, a circular sealing member 40, such as an O-ring, surrounds and appropriately seals the anode gas inlet manifold 27 and the anode gas outlet manifold 30 between the cathode separator 16 and the anode separator 17, between the cathode separator 16 and the cathode feed plate 22C, and between the anode separator 17 and the anode feed plate 22A.

As illustrated in Figs. 2A and 3A, the electrochemical hydrogen pump 100 includes a voltage application unit 102.

The voltage application unit 102 applies a voltage between the anode catalyst layer 13 and the cathode catalyst layer 12. More specifically, a high voltage of the voltage application unit 102 is applied to the anode catalyst layer 13, and a low voltage of the voltage application unit 102 is applied to the cathode catalyst layer 12. The voltage application unit 102 may have any structure that can apply a voltage between the anode catalyst layer 13 and the cathode catalyst layer 12. For example, the voltage application unit 102 may be an apparatus that controls the voltage between the anode catalyst layer 13 and the cathode catalyst layer 12. In this case, the voltage application unit 102 includes a DC/DC converter when coupled to a direct-current power supply, such as a battery, a solar cell, or a fuel cell, or includes an AC/DC converter when coupled to an alternating-current power supply, such as a commercial power supply.

For example, the voltage application unit 102 may be an electric power type power supply in which the voltage between the anode catalyst layer 13 and the cathode catalyst layer 12 and the electric current between the anode catalyst layer 13 and the cathode catalyst layer 12 are controlled such that predetermined electric power is supplied to the hydrogen pump unit 100A.

In the embodiments illustrated in Figs. 2A and 3A, a low-voltage terminal of the voltage application unit 102 is coupled to the cathode feed plate 22C, and a high-voltage terminal of the voltage application unit 102 is coupled to the anode feed plate 22A. The cathode feed plate 22C is in electrical contact with the cathode separator 16 located at one end in the stacking direction, and the anode feed plate 22A is in electrical contact with the anode separator 17 located at the other end in the stacking direction.

Although not shown in Figs. 1, 2A, and 3A, the hydrogen pressurization system 200 according to the present embodiment may include components and equipment required for the hydrogen pressurization operation of the electrochemical hydrogen pump 100.

For example, the hydrogen pressurization system 200 includes a temperature sensor for sensing the temperature of the electrochemical hydrogen pump 100 and a pressure sensor for sensing the pressure of an off-gas pressurized by the cathode CA in the electrochemical hydrogen pump 100.

In the hydrogen pressurization system 200, the anode gas inlet line 29, the anode gas outlet line 31, and the cathode gas outlet line 26 include a valve for opening and closing the line at an appropriate position.

The structure of the electrochemical hydrogen pump 100 and the structure of the hydrogen pressurization system 200 are examples, to which the present disclosure is not limited. For example, the electrochemical hydrogen pump 100 may have a dead end structure in which hydrogen (H₂) in a hydrogen-containing gas supplied to the anode AN through the anode gas inlet manifold 27 is totally pressurized by the cathode CA without the anode gas outlet manifold 30 or the anode gas outlet line 31.

### [Operation]

An example of the operation of the hydrogen pressurization system according to the first embodiment is described below with reference to the accompanying drawings.

The following operation may be performed by an operation circuit of a controller (not shown) reading a control program from a memory circuit of the controller. The following operation is not necessarily performed with a controller. An operator may perform part of the operation.

First, the hydrogen pressurization operation of the electrochemical hydrogen pump 100 in the hydrogen pressurization system 200 is started by supplying a low-pressure hydrogen-containing gas to the anode AN of the electrochemical hydrogen pump 100 and applying a voltage of the voltage application unit 102 to the electrochemical hydrogen pump 100. The hydrogen-containing gas to be supplied to the anode AN of the electrochemical hydrogen pump 100 passes through the flow path 113 of the first removal unit 110.

A hydrogen molecule is dissociated into protons and electrons by an oxidation reaction in the anode catalyst layer 13 of the anode AN (formula (1)). The protons move into the cathode catalyst layer 12 through the electrolyte membrane 11. The electrons move into the cathode catalyst layer 12 through the voltage application unit 102.

A hydrogen molecule is then reproduced by a reduction reaction in the cathode catalyst layer 12 (formula (2)). It is known that the protons moving from the anode AN to the cathode CA through the electrolyte membrane 11 are accompanied by a given amount of electroosmotic water.

The off-gas generated in the cathode CA can be pressurized by increasing the pressure loss in a hydrogen outlet line with a flow controller (not shown). The hydrogen outlet line is the cathode gas outlet line 26 illustrated in Figs. 1 and 2A, for example. The flow controller is a back-pressure valve or a regulating valve in the hydrogen outlet line, for example. Upon a decrease in the pressure loss of the flow controller, the off-gas discharged from the cathode CA of the electrochemical hydrogen pump 100 passes through the flow path 114 of the first removal unit 110.

Anode: H₂ (low pressure) → 2H⁺ + 2e⁻ (1)

Cathode: 2H⁺ + 2e⁻ → H₂ (high pressure) (2)

In this manner, the electrochemical hydrogen pump 100 transfers hydrogen contained in the hydrogen-containing gas containing water vapor to be supplied to the anode AN to the cathode CA through the electrolyte membrane 11 and pressurizes the hydrogen. In the first removal unit 110, the off-gas discharged from the cathode CA of the electrochemical hydrogen pump 100 and the hydrogen-containing gas to be supplied to the anode AN of the electrochemical hydrogen pump 100 flow with a water permeable membrane 115 interposed therebetween.

Thus, the hydrogen pressurization system 200 according to the present embodiment can more appropriately perform the removal of at least one of water vapor and water liquid contained in the off-gas discharged from the cathode CA of the electrochemical hydrogen pump 100 and the humidification of the hydrogen-containing gas to be supplied to the anode AN of the electrochemical hydrogen pump 100 than before.

For example, the differential pressure in the first removal unit 110 can cause water liquid to be transferred from the high-pressure off-gas to the low-pressure hydrogen-containing gas through the water permeable membrane 115. This can transfer from a high partial water vapor pressure off-gas to a low partial water vapor pressure hydrogen-containing gas through the water permeable membrane. That is, when a pressure of the off-gas is higher than a pressure of the hydrogen-containing gas and/or a partial water vapor pressure off-gas is higher than a partial water vapor pressure of hydrogen-containing gas, this can decrease the content of at least one of water vapor and water liquid contained in an off-gas. At least one of water vapor and water liquid passing through the water permeable membrane 115 can humidify the hydrogen-containing gas.

### EXAMPLES

The hydrogen pressurization system 200 according to the present example is the same as the hydrogen pressurization system 200 according to the first embodiment except the following first removal unit 110A.

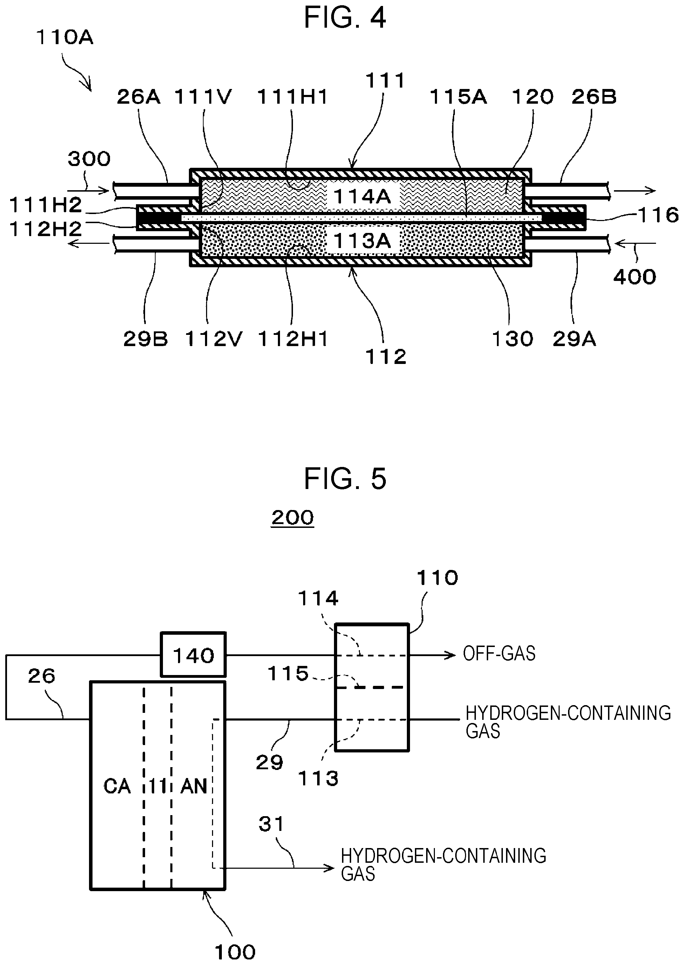

Fig. 4 is a schematic view of a first removal unit of a hydrogen pressurization system according to an example of the first embodiment.

In the example illustrated in Fig. 4, the first removal unit 110A includes a pair of metal frames 111 and 112 of almost the same shape, a water permeable membrane 115A, and a sealing member 116.

The metal frame 111 includes a first flat portion 111H1, a second flat portion 111H2, and a vertical portion 111V.

The first flat portion 111H1 constitutes the central portion of the metal frame 111. The second flat portion 111H2 constitutes the circular periphery of the metal frame 111. The vertical portion 111V constitutes the cylindrical sidewall between the periphery of the first flat portion 111H1 and the inner end portion of the second flat portion 111H2. The first flat portion 111H1 and the vertical portion 111V form a recessed portion in the metal frame 111. Thus, in the first removal unit 110A, the first flat portion 111H1 and the vertical portion 111V of the metal frame 111 and the water permeable membrane 115A form a flow path 114A through which an off-gas flows.

The metal frame 112 includes a first flat portion 112H1, a second flat portion 112H2, and a vertical portion 112V.

The first flat portion 112H1 constitutes the central portion of the metal frame 112. The second flat portion 112H2 constitutes the circular periphery of the metal frame 112. The vertical portion 112V constitutes the cylindrical sidewall between the periphery of the first flat portion 112H1 and the inner end portion of the second flat portion 112H2. The first flat portion 112H1 and the vertical portion 112V form a recessed portion in the metal frame 112. Thus, in the first removal unit 110A, the first flat portion 112H1 and the vertical portion 112V of the metal frame 112 and the water permeable membrane 115A form a flow path 113A through which a hydrogen-containing gas flows.

In the metal frame 111 and the metal frame 112, the second flat portion 111H2 faces the second flat portion 112H2 with the end portion of the water permeable membrane 115A interposed therebetween. The end portion of the water permeable membrane 115A is surrounded with a circular sealing member 116 between the second flat portion 111H2 and the second flat portion 112H2. Thus, the interior of the first removal unit 110A is appropriately sealed with the sealing member 116.

Through the vertical portion 111V of the metal frame 111, an upstream pipe 26A constituting the cathode gas outlet line 26 (see Fig. 1) located upstream of the first removal unit 110A and a downstream pipe 26B constituting the cathode gas outlet line 26 located downstream of the first removal unit 110A communicate with the interior of the first removal unit 110A. As illustrated in Fig. 4, the upstream pipe 26A and the downstream pipe 26B may be aligned in this order in an off-gas flow direction 300.

Through the vertical portion 112V of the metal frame 112, an upstream pipe 29A constituting the anode gas inlet line 29 (see Fig. 1) located upstream of the first removal unit 110A and a downstream pipe 29B constituting the anode gas inlet line 29 located downstream of the first removal unit 110A communicate with the interior of the first removal unit 110A. As illustrated in Fig. 4, the upstream pipe 29A and the downstream pipe 29B may be aligned in this order in a hydrogen-containing gas flow direction 400.

In the example illustrated in Fig. 4, the off-gas flow direction 300 is opposite to the hydrogen-containing gas flow direction 400 in the first removal unit 110A, and the off-gas flow is opposite to the hydrogen-containing gas flow. The present disclosure is not limited to this example. In the first removal unit 110A, these flows may be parallel or perpendicular to each other. As illustrated in Fig. 4, however, the off-gas flow opposite to the hydrogen-containing gas flow enables at least one of water vapor and water liquid contained in the off-gas to more efficiently move into the hydrogen-containing gas through the water permeable membrane 115A than the off-gas flow parallel or perpendicular to the hydrogen-containing gas flow.

Thus, in the hydrogen pressurization system 200 according to the present example, at least one of water vapor and water liquid contained in the high-pressure off-gas in the flow path 114A moves into the low-pressure hydrogen-containing gas in the flow path 113A through the water permeable membrane 115A in the first removal unit 110A. This enables the removal of at least one of water vapor and water liquid contained in the off-gas passing through the flow path 114A near the surface of the water permeable membrane 115A and the humidification of the hydrogen-containing gas passing through the flow path 113A near the water permeable membrane 115A. For example, when liquid water in the high-pressure off-gas forms a liquid layer on the surface of the water permeable membrane 115A, the differential pressure between the flow path 114A and the flow path 113A presses the water permeable membrane 115A to the back side thereof, thereby efficiently transferring liquid water in the off-gas in the flow path 114A to the hydrogen-containing gas in the flow path 113A.

### [First Porous Structure]

As illustrated in Fig. 4, in the hydrogen pressurization system 200 according to the present example, the first removal unit 110A includes a first porous structure 120 in contact with the water permeable membrane 115A in the flow path 114A through which the off-gas flows.

The first porous structure 120 desirably has elasticity to follow the displacement or deformation of the water permeable membrane 115A caused by the differential pressure between the flow path 114A and the flow path 113A. For example, the first porous structure 120 may be composed of an elastomer containing carbon fibers. For example, the elastomer is carbon felt containing a stack of carbon fibers.

If the flow path 114A does not include the first porous structure 120, the off-gas flow in the flow path 114A tends to be a laminar flow. In this case, at least one of water vapor and water liquid contained in the off-gas flows together with the off-gas, and at least one of water vapor and water liquid contained in the off-gas distant from the water permeable membrane 115A, for example, is less likely to come into contact with the water permeable membrane 115A. Thus, in this case, at least one of water vapor and water passing through the water permeable membrane 115A may be limited to at least one of water vapor and water liquid contained in the off-gas near the surface of the water permeable membrane 115A.

In contrast, in the hydrogen pressurization system 200 according to the present example, the first porous structure 120 in the flow path 114A through which an off-gas flows can forcibly change the off-gas flow in random directions in the flow path 114A. Thus, at least one of water vapor and water liquid contained in the off-gas at any position in the flow path 114A can come into contact with the water permeable membrane 115A.

Thus, in the hydrogen pressurization system 200 according to the present example, at least one of water vapor and water liquid contained in the off-gas is more likely to come into contact with the water permeable membrane 115A than in hydrogen pressurization systems without the first porous structure 120 in the flow path 114A. When at least one of water vapor and water liquid contained in the off-gas comes into contact with the water permeable membrane 115A, the at least one of water vapor and water liquid to be rapidly transferred from the off-gas to the hydrogen-containing gas and promote the removal of at least one of water vapor and water liquid contained in the off-gas and humidification of the hydrogen-containing gas.

If the first porous structure 120 is not in contact with the water permeable membrane, the off-gas tends to flow through the space between the first porous structure 120 and the water permeable membrane 115A.

In such a case, for example, variations in the size of the space due to variations in the differential pressure between the flow path 114A and the flow path 113A result in variations in the off-gas flow in the flow path 114A and consequently variations in the contact between the water permeable membrane 115A and the off-gas. This affects the water permeability of the water permeable membrane 115A and makes it difficult to stably perform the removal of at least one of water vapor and water liquid contained in the off-gas and humidification of the hydrogen-containing gas.

By contrast, the hydrogen pressurization system 200 according to the present example can have a stable contact interface between the first porous structure 120 and the water permeable membrane 115A and thereby alleviate such a problem.

In the hydrogen pressurization system 200 according to the present example, the first porous structure 120 composed of an elastomer containing carbon fibers can stably maintain the contact interface between the first porous structure 120 and the water permeable membrane 115A.

For example, deformation of the water permeable membrane 115A due to the differential pressure between the flow path 114A and the flow path 113A or deformation of the metal frame 111 due to the gas pressure of an off-gas makes it difficult to stably maintain the contact interface between the first porous structure 120 and the water permeable membrane 115A.

Even in such a case, in the hydrogen pressurization system 200 according to the present example, the elastic deformation of the first porous structure 120 can follow the deformation of the water permeable membrane 115A or the deformation of the metal frame 111. For example, when the first porous structure 120 is placed in the recessed portion in the metal frame 111, the first porous structure 120 may be compressed in advance in proportion to the deformation of the component.

This enables the contact interface between the first porous structure 120 and the water permeable membrane 115A to be easily maintained throughout the water permeable membrane 115A. Thus, the hydrogen pressurization system 200 according to the present example can stably perform the removal of at least one of water vapor and water liquid contained in the off-gas and humidification of the hydrogen-containing gas.

### [Second Porous Structure]

As illustrated in Fig. 4, in the hydrogen pressurization system 200 according to the present example, the first removal unit 110A includes a second porous structure 130 in contact with the water permeable membrane 115A in the flow path 113A through which the hydrogen-containing gas flows.

The second porous structure 130 desirably has high rigidity to reduce the displacement or deformation of the water permeable membrane 115A caused by the differential pressure between the flow path 114A and the flow path 113A. For example, the second porous structure 130 may be made of a metal. The second porous structure 130 made of a metal may be a sintered metal, for example. The sintered metal is a metal powder sintered body made of stainless steel or titanium or a metal fiber sintered body, for example.

If the flow path 113A does not include the second porous structure 130, the differential pressure between the flow path 114A and the flow path 113A causes the water permeable membrane 115A to be deformed in such a direction that the flow path 113A is blocked. For example, the differential pressure between the flow path 114A and the flow path 113A may bring the water permeable membrane 115A into contact with the first flat portion 112H1 of the metal frame 112.

This impedes the flow of the hydrogen-containing gas. In the hydrogen pressurization system 200 according to the present example, however, such a problem can be alleviated by the second porous structure 130 placed in the flow path 113A through which the hydrogen-containing gas flows.

If the second porous structure 130 is not in contact with the water permeable membrane 115A, the hydrogen-containing gas flows more easily through the space between the second porous structure 130 and the water permeable membrane 115A.

In such a case, for example, variations in the size of the space due to variations in the differential pressure between the flow path 114A and the flow path 113A result in variations in the hydrogen-containing gas flow in the flow path 113A and consequently variations in the contact between the water permeable membrane 115A and the hydrogen-containing gas. This affects the water permeability of the water permeable membrane 115A and makes it difficult to stably perform the removal of at least one of water vapor and water liquid contained in the off-gas and humidification of the hydrogen-containing gas.

By contrast, the hydrogen pressurization system 200 according to the present example can have a stable contact interface between the second porous structure 130 and the water permeable membrane 115A and thereby alleviate such a problem.

In the hydrogen pressurization system 200 according to the present example, the second porous structure 130 made of the metallic material can have appropriate rigidity. This can reduce the deformation of the water permeable membrane 115A due to the differential pressure between the flow path 114A and the flow path 113A and can ensure a stable contact interface between the first porous structure 120 and the water permeable membrane 115A and a stable contact interface between the second porous structure 130 and the water permeable membrane 115A. Thus, the hydrogen pressurization system 200 according to the present example can stabilize the removal of removal of water from the off-gas the off-gas and humidification of the hydrogen-containing gas.

Except for these characteristics, the hydrogen pressurization system 200 according to the present example may be the same as the hydrogen pressurization system 200 according to the first embodiment.

### Second Embodiment

### (Second Embodiment)

Fig. 5 is a schematic view of a hydrogen pressurization system according to a second embodiment.

In the embodiment illustrated in Fig. 5, a hydrogen pressurization system 200 includes an electrochemical hydrogen pump 100, a first removal unit 110, and a cooler 140.

The electrochemical hydrogen pump 100 and the first removal unit 110 are the same as in the hydrogen pressurization system 200 according to the first embodiment and are not described here.

The cooler 140 is an apparatus for cooling an off-gas located upstream of the first removal unit 110.

More specifically, in the hydrogen pressurization system 200 according to the present embodiment, the cooler 140 is located on the cathode gas outlet line 26 upstream of the first removal unit 110. The cooler 140 may have any structure that can cool an off-gas passing through the cathode gas outlet line 26.

For example, the cooler 140 may be configured to air-cool or water-cool an off-gas passing through the cathode gas outlet line 26. For air-cooling, for example, the cooler 140 may be a combination of radiating fins located on the surface of a pipe constituting the cathode gas outlet line 26 and a blower for blowing cool air onto the radiating fins. For water-cooling, for example, the cooler 140 may be a combination of a double pipe constituting the cathode gas outlet line 26 and a pump for supplying cold water into an outer pipe of the double pipe.

Although now shown, an off-gas temperature sensor may be placed in position on the cathode gas outlet line 26, and a controller may perform feedback control to adjust the off-gas temperature to a desired temperature on the basis of the sensing data of the sensor.

Thus, the hydrogen pressurization system 200 according to the present embodiment can cool the off-gas with the cooler 140 and thereby promote the removal of water vapor from the off-gas and humidification of the hydrogen-containing gas. For example, the saturated water vapor density of an off-gas decreases with decreasing temperature of the off-gas. Thus, if the water vapor content of an off-gas is equal to the saturated water vapor density, the cooler 140 can decrease the off-gas temperature to rapidly decrease the water vapor content of the off-gas and promote the removal of water vapor from the off-gas. This increases the amount of liquid water in the first removal unit 110 and increases the probability of the liquid water coming into contact with the water permeable membrane 115. When the liquid water comes into contact with the water permeable membrane 115, the differential pressure in the first removal unit 110 can cause the liquid water to be rapidly transferred from the off-gas to the hydrogen-containing gas and promote humidification of the hydrogen-containing gas.

Except for these characteristics, the hydrogen pressurization system 200 according to the present embodiment may be the same as the hydrogen pressurization system 200 according to the first embodiment or the example of the first embodiment.

### (Modified Example)

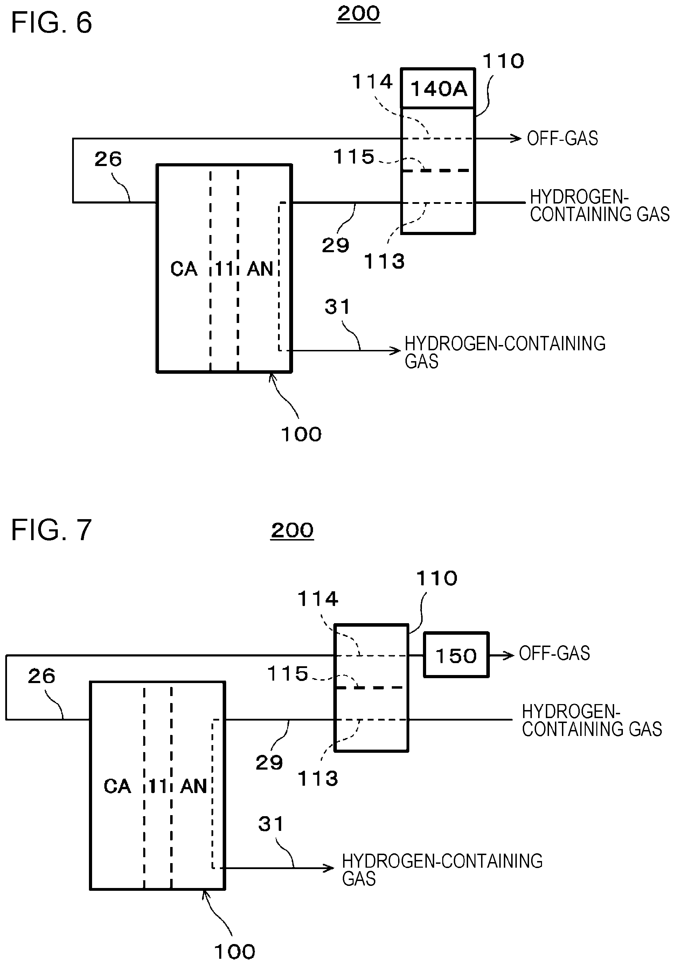

Fig. 6 is a schematic view of a hydrogen pressurization system according to a modified example of the second embodiment.

In the embodiment illustrated in Fig. 6, a hydrogen pressurization system 200 includes an electrochemical hydrogen pump 100, a first removal unit 110, and a cooler 140A.

The electrochemical hydrogen pump 100 and the first removal unit 110 are the same as in the hydrogen pressurization system 200 according to the first embodiment and are not described here.

The cooler 140A is an apparatus for cooling an off-gas in the first removal unit 110.

More specifically, in the hydrogen pressurization system 200 according to the present modified example, the cooler 140A is provided within a flow path component constituting the flow path 114 of the first removal unit 110 through which an off-gas flows. The cooler 140 may have any structure that can cool an off-gas within the first removal unit 110.

For example, the cooler 140A may be configured to air-cool or water-cool an off-gas in the first removal unit 110. For air-cooling, for example, the cooler 140A may be a combination of radiating fins located on the surface of the metal frame 111 (see Fig. 4) constituting the flow path 114 through which an off-gas flows and a blower for blowing cool air onto the radiating fins. For water-cooling, for example, the cooler 140A may be a combination of a cold water mechanism for supplying cold water to the surface of the metal frame 111 (see Fig. 4) constituting the flow path 114 through which an off-gas flows and a pump for supplying cold water to the cold water mechanism.

Although now shown, an off-gas temperature sensor may be placed in position on the first removal unit 110, and a controller may perform feedback control to adjust the off-gas temperature to a desired temperature on the basis of the sensing data of the sensor.

Thus, the hydrogen pressurization system 200 according to the present modified example can cool an off-gas in the first removal unit 110 and allows the first removal unit 110 to function as a condenser for the off-gas. This reduces the possibility of condensed water blocking the cathode gas outlet line 26 and reduces the pressure fluctuation of the cathode gas outlet line 26 as compared with the cooling of an off-gas before the off-gas flows into the first removal unit 110. The reason for this is described below. Condensed water produced by cooling an off-gas with a cooler located upstream of the first removal unit 110 can block a line from the cooler to the first removal unit 110. In the hydrogen pressurization system 200 according to the present modified example, condensed water produced in the first removal unit 110 is directly transferred through the water permeable membrane 115 into the hydrogen-containing gas to be supplied to the anode AN and is therefore less likely to block the line.

Except for these characteristics, the hydrogen pressurization system 200 according to the present modified example may be the same as the hydrogen pressurization system 200 according to the first embodiment, the example of the first embodiment, or the second embodiment. For example, the operational advantages of the hydrogen pressurization system 200 according to the present modified example other than those described above are identical with the operational advantages of the hydrogen pressurization system 200 according to the second embodiment and are not described here.

### (Third Embodiment)

Fig. 7 is a schematic view of a hydrogen pressurization system according to a third embodiment.

In the embodiment illustrated in Fig. 7, a hydrogen pressurization system 200 includes an electrochemical hydrogen pump 100, a first removal unit 110, and a second removal unit 150.

The electrochemical hydrogen pump 100 and the first removal unit 110 are the same as in the hydrogen pressurization system 200 according to the first embodiment and are not described here.

The second removal unit 150 is an apparatus that is located downstream of the first removal unit 110 and contains an adsorbent for removing at least one of water vapor and water liquid contained in an off-gas. More specifically, the second removal unit 150 is an apparatus that is located between the first removal unit 110 and hydrogen utilization equipment (not shown) on the cathode gas outlet line 26 and contains an adsorbent for removing at least one of water vapor and water liquid associated with hydrogen.

The hydrogen utilization equipment may be any equipment for utilizing hydrogen. For example, the hydrogen utilization equipment is a hydrogen reservoir that temporarily stores hydrogen or a fuel cell that uses hydrogen for power generation.

The adsorbent in the second removal unit 150 may be composed of any material that can adsorb and remove at least one of water vapor and water liquid associated with hydrogen. For example, the material of the adsorbent is a porous material, such as zeolite or silica gel. Although a dry adsorbent can adsorb at least one of water vapor and water liquid, the adsorption performance of the adsorbent decreases with adsorption of at least one of water vapor and water to the adsorbent. Thus, the adsorbent must be replaced or regenerated.

Thus, in the hydrogen pressurization system 200 according to the present embodiment, at least one of water vapor and water contained in an off-gas that is not removed by the first removal unit 110 is adsorbed and removed using the adsorbent in the second removal unit 150. Thus, the hydrogen pressurization system 200 according to the present embodiment can decrease the amount of at least one of water vapor and water to be adsorbed on the adsorbent per unit time as compared with the case in which at least one of water vapor and water contained in an off-gas is not separated with the first removal unit 110. Thus, even with a smaller loading amount of adsorbent in the second removal unit 150, the adsorption performance of the adsorbent in the second removal unit 150 can be appropriately maintained for a desired time. This can decrease the size of the second removal unit 150 and reduce costs.

In the hydrogen pressurization system 200 according to the present embodiment, the adsorption and removal of at least one of water vapor and water liquid in the second removal unit 150 enables a dry off-gas to be supplied to a hydrogen reservoir located downstream of the second removal unit 150.

Except for these characteristics, the hydrogen pressurization system 200 according to the present embodiment may be the same as the hydrogen pressurization system 200 according to the first embodiment, the example of the first embodiment, the second embodiment, or the modified example of the second embodiment.

The first embodiment, the example of the first embodiment, the second embodiment, the modified example of the second embodiment, and the third embodiment may be combined, unless they contradict each other.

Various modifications and other embodiments of the present disclosure are apparent to those skilled in the art from the foregoing description. Thus, the foregoing description should be construed as only an example and is provided to teach those skilled in the art the best mode for implementing the present disclosure. The operating conditions, composition, structure, and/or function can be substantially changed without departing from the spirit of the present disclosure.

### Industrial Applicability

One aspect of the present disclosure can be utilized in a hydrogen pressurization system that can more appropriately perform the removal of at least one of water vapor and water liquid contained in an off-gas discharged from a cathode of an electrochemical hydrogen pump and humidification of a hydrogen-containing gas to be supplied to an anode of the electrochemical hydrogen pump than before.

### Reference Signs List

- 11:: electrolyte membrane
- 12:: cathode catalyst layer
- 13:: anode catalyst layer
- 14:: cathode gas diffusion layer
- 15:: anode gas diffusion layer
- 16:: cathode separator
- 17:: anode separator
- 21:: insulator
- 22A:: anode feed plate
- 22C:: cathode feed plate
- 23A:: anode insulating plate
- 23C:: cathode insulating plate
- 24A:: anode end plate
- 24C:: cathode end plate
- 25:: fastener
- 26:: cathode gas outlet line
- 26A:: upstream pipe
- 26B:: downstream pipe
- 27:: anode gas inlet manifold
- 28:: cathode gas outlet manifold
- 29:: anode gas inlet line
- 29A:: upstream pipe
- 29B:: downstream pipe
- 30:: anode gas outlet manifold
- 31:: anode gas outlet line
- 32:: cathode gas passage
- 33:: anode gas passage
- 34:: cathode gas flow path
- 35:: first anode gas flow path
- 36:: second anode gas flow path
- 40:: sealing member
- 42:: sealing member
- 43:: sealing member
- 100:: electrochemical hydrogen pump
- 100A:: hydrogen pump unit
- 102:: voltage application unit
- 110:: first removal unit
- 110A:: first removal unit
- 111:: metal frame
- 111H1:: first flat portion
- 111H2:: second flat portion
- 111V:: vertical portion
- 112:: metal frame
- 112H1:: first flat portion
- 112H2:: second flat portion
- 112V:: vertical portion
- 113:: flow path
- 113A:: flow path
- 114:: flow path
- 114A:: flow path
- 115:: water permeable membrane
- 115A:: water permeable membrane
- 116:: sealing member
- 120:: first porous structure
- 130:: second porous structure
- 140:: cooler
- 140A:: cooler
- 150:: second removal unit
- 200:: hydrogen pressurization system
- AN:: anode
- CA:: cathode

## Claims

1. A hydrogen pressurization system comprising:
an electrochemical hydrogen pump being configured to transfer hydrogen in a hydrogen-containing gas to be supplied to an anode to a cathode through an electrolyte membrane, and pressurize the hydrogen; and
a first removal unit through which an off-gas discharged from the cathode of the electrochemical hydrogen pump and the hydrogen-containing gas to be supplied to the anode flow with a water permeable membrane interposed therebetween, the first removal unit being configured to remove at least one of water vapor and water liquid contained in the off-gas.

2. The hydrogen pressurization system according to Claim 1, further comprising a cooler for cooling the off-gas located upstream of the first removal unit.

3. The hydrogen pressurization system according to Claim 1, further comprising a cooler for cooling the off-gas in the first removal unit.

4. The hydrogen pressurization system according to any one of Claims 1 to 3, wherein the first removal unit includes a first porous structure in contact with the water permeable membrane in a flow path through which the off-gas flows.

5. The hydrogen pressurization system according to Claim 4, wherein the first porous structure is composed of an elastomer containing carbon fibers.

6. The hydrogen pressurization system according to any one of Claims 1 to 5, wherein the water permeable membrane is composed of a polymer film.

7. The hydrogen pressurization system according to any one of Claims 1 to 6, wherein the first removal unit includes a second porous structure in contact with the water permeable membrane in a flow path through which the hydrogen-containing gas flows.

8. The hydrogen pressurization system according to Claim 7, wherein the second porous structure is made of a metal.

9. The hydrogen pressurization system according to Claim 8, wherein the second porous structure is a sintered metal.

10. The hydrogen pressurization system according to any one of Claims 1 to 9, further comprising a second removal unit containing an adsorbent for removing at least one of water vapor and water liquid from the off-gas located downstream of the first removal unit.
